# EUROPEAN PATENT APPLICATION

(11) **EP 2 211 054 A2**
(43) Date of publication of application: **28.07.2010**
(21) Application number: 10150920.6
(22) Date of filing: 18.01.2010
(51) Int. Cl.: F03D 1/06, F03D 11/00

(54) **Shaft for wind turbine generator and method for assembling wind turbine generator**

(30) Priority: 22.01.2009 US 357793
(71) Applicant: General Electric Company, Schenectady, NY 12345 (US)
(72) Inventor: Sathian, Sujith, Simpsonville, SC 29681 (US); Bagepalli, Bharat Sampathkumaran, Niskayuna, NY 12309 (US)
(74) Representative: Bedford, Grant Richard

(57) **Abstract**

A wind turbine rotor (108) includes a first portion (160) of a shaft (134) fabricated from a first steel alloy having a first strength property value. The wind turbine rotor also includes a second portion (170) of the shaft fabricated from a second steel alloy having a second strength property value. The first strength property value is greater than the second strength property value. The second portion of the shaft is welded to the first portion of the shaft.

## Description

The subject matter described herein generally relates to wind turbine generators and, more particularly, to a method and shaft for facilitating assembly of wind turbine generators.

At least some known wind turbine generators include a rotor having multiple blades. The rotor is sometimes coupled to a housing, or nacelle, that is positioned on top of a base, for example, a truss or tubular tower. At least some known utility grade wind turbines (i.e., wind turbines designed to provide electrical power to a utility grid) have rotor blades having predetermined shapes and dimensions. The rotor blades transform mechanical wind energy into induced blade lift forces that further induce a mechanical rotational torque that drives one or more generators via a rotor shaft, subsequently generating electric power. The generators are sometimes, but not always, rotationally coupled to the rotor shaft through a gearbox. The gearbox steps up the inherently low rotational speed of the rotor shaft for the generator to efficiently convert the rotational mechanical energy to electrical energy, which is fed into the electric utility grid. Gearless direct drive wind turbine generators also exist.

During assembly of such known wind turbine generators, the rotor shaft is formed from a single forged piece of a high-strength steel alloy that is machined to final dimensions and tolerances. Such alloys typically predominate the material makeup of the rotor shaft and include expensive materials such as chromium (Cr) and nickel (Ni). Such a high percentage of alloy content in the steel facilitates forming homogenous properties throughout the rotor shaft material during quenching operations in the fabrication process. Such properties include sufficient tensile strength dispersed throughout the rotor shaft, whereby expected loads and stresses may be accommodated by the entire rotor shaft, and thereby avoiding formation of weaker regions susceptible to possible deleterious effects of high stresses. Many known rotor shafts weigh more than 8 metric tons (8000 kilograms (kg)) (7.26 US tons, or, 17,600 pounds (Ibs.)). Therefore, use of such alloy materials tends to significantly increase the cost of rotor shaft fabrication.

As described above, many known wind turbine rotor shafts have substantially homogeneous strength properties. Moreover, such known rotor shafts, while in operation, typically experience a high stress region near a forward portion and very low stress regions in an aft portion of the rotor shaft. Higher stress regions in the rotor shaft require that the material to be used to fabricate the rotor shaft have appropriate higher mechanical properties, such as tensile strength. Lower stress regions in the rotor shaft do not require the higher mechanical properties, such as tensile strength.

In one aspect according to the present invention, a method of assembling a wind turbine generator is provided. A method of assembling a wind turbine generator includes fabricating a first portion of a shaft from a first steel alloy having a first strength property value. The method also includes fabricating a second portion of the shaft from a second steel alloy having a second strength property value. The first strength property value is greater than the second strength property value. The method further includes welding the second portion of the shaft to the first portion of the shaft.

In another aspect, a wind turbine rotor is provided. The rotor includes a first portion of a shaft fabricated from a first steel alloy having a first strength property value. The rotor also includes a second portion of the shaft fabricated from a second steel alloy having a second strength property value. The first strength property value is greater than the second strength property value. The second portion of the shaft is welded to the first portion of the shaft.

In still another aspect, a wind turbine generator is provided. The wind turbine generator includes at least one of a gearbox and a generator. The wind turbine generator also includes a rotor including a hub. The rotor also includes a first portion of a shaft fabricated from a first steel alloy having a first strength property value. The first portion of the shaft is coupled to the hub. The rotor further includes a second portion of the shaft fabricated from a second steel alloy having a second strength property value. The first strength property value is greater than the second strength property value. The second portion of the shaft is coupled to the first portion of the shaft and to at least one of the gearbox and the generator.

The method and rotor shaft described herein facilitate assembly of wind turbine generators by using higher-strength, more robust steel alloys in the forward portion of the rotor shaft that typically experiences higher stress and loading. This is contrasted to using lower strength, less robust steel alloys in the aft portion of the rotor shaft that typically experiences lower stress and loading. The forward and aft portions of the rotor shaft are welded to each other by at least one of flash welding, narrow-groove gas tungsten arc welding (GTAW), gas metal arc welding (GMAW), flux-cored arc welding (FCAW), laser beam welding, hybrid laser beam welding, resistance welding, and friction welding. One technical effect of fabricating the rotor shaft with the method described herein is lower material costs.

Various aspects and embodiments of the present invention will now be described in connection with the accompanying drawings, in which:
Figure 1 is a schematic view of an exemplary wind turbine generator;
Figure 2 is a cross-sectional schematic view of a nacelle that may be used with the wind turbine generator shown in Figure 1;
Figure 3 is a schematic view of an exemplary rotor shaft that may be used with the wind turbine generator shown in Figure 1;
Figure 4 is a schematic view of an exemplary flash welding configuration that may be used to fabricate the rotor shaft shown in Figure 3;
Figure 5 is a schematic view of an exemplary arc welding configuration that may be used to fabricate the rotor shaft shown in Figure 3;
Figure 6 is a schematic view of a portion of an exemplary arc weld that may be used to fabricate the rotor shaft shown in Figure 3;
Figure 7 is a schematic view of a portion of an alternative arc weld that may be used to fabricate the rotor shaft shown in Figure 3;
Figure 8 is a schematic view of an exemplary laser welding configuration that may be used to fabricate the rotor shaft shown in Figure 3;
Figure 9 is a schematic view of an exemplary resistance welding configuration that may be used to fabricate the rotor shaft shown in Figure 3;
Figure 10 is a schematic view of an exemplary friction welding configuration that may be used to fabricate the rotor shaft shown in Figure 3;
Figure 11 is a schematic view of a bearing extending about at least a portion of the rotor shaft shown in Figure 3;
Figure 12 is a schematic view of two bearings extending about at least a portion of the rotor shaft shown in Figure 3;
Figure 13 is a schematic view of an alternative rotor shaft that may be used with the wind turbine generator shown in Figure 1; and
Figure 14 is a flow chart of an exemplary method of assembling a wind turbine generator.

The method and rotor shaft described herein facilitate assembly of wind turbine generators by using higher-strength, more robust steel alloys in the forward portion of the rotor shaft that typically experiences higher stress and loading. This is contrasted to using lower strength, less robust steel alloys in the aft portion of the rotor shaft that typically experiences lower stress and loading. The forward and aft portions of the rotor shaft are welded to each other by at least one of flash welding, narrow-groove gas tungsten arc welding (GTAW), gas metal arc welding (GMAW), flux-cored arc welding (FCAW), laser beam welding, hybrid laser beam welding, resistance welding, and friction welding. Specifically, a technical effect of fabricating two separate portions of the rotor shaft provides a cost savings opportunity by requiring smaller forging equipment and smaller machining equipment, as well as separate suppliers for each portion. Also, specifically, a technical effect of using low-alloy steel on a portion of the rotor shaft provides a potential cost savings with low material costs. Further, specifically, technical effects of flash welding, narrow-groove gas tungsten arc welding (GTAW), gas metal arc welding (GMAW), flux-cored arc welding (FCAW), laser beam welding, hybrid laser beam welding, resistance welding, and friction welding include lower costs due to less labor and materials.

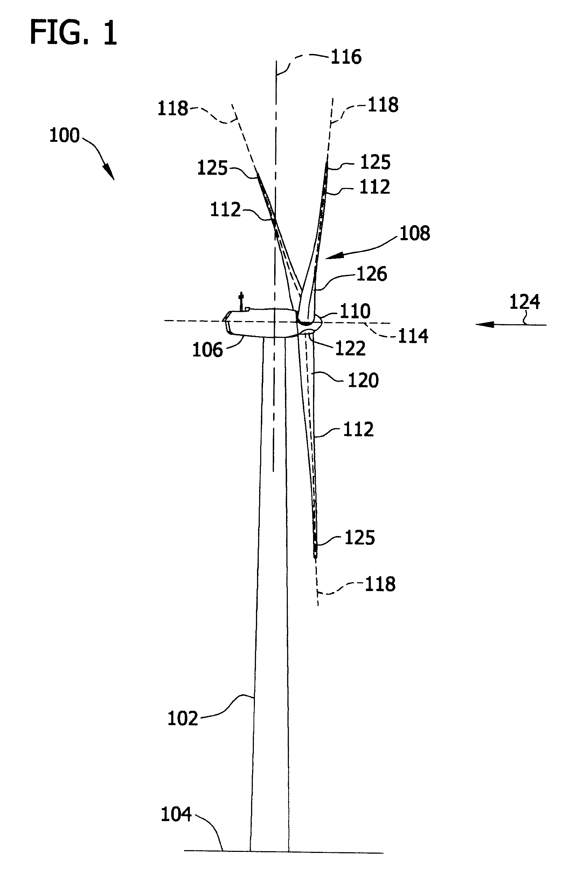

Figure 1 is a schematic view of an exemplary wind turbine generator 100. In the exemplary embodiment, wind turbine generator 100 is a horizontal axis wind turbine. Alternatively, wind turbine 100 may be a vertical axis wind turbine. Wind turbine 100 has a tower 102 extending from a supporting surface 104 that tower 102 is coupled to by either anchor bolts or a foundation mounting piece (neither shown), a nacelle 106 coupled to tower 102, and a rotor 108 coupled to nacelle 106. Rotor 108 has a rotatable hub 110 and a plurality of rotor blades 112 coupled to hub 110. In the exemplary embodiment, rotor 108 has three rotor blades 112. Alternatively, rotor 108 has any number of rotor blades 112 that enables wind turbine generator 100 to function as described herein. In the exemplary embodiment, tower 102 is fabricated from tubular steel extending between supporting surface 104 and nacelle 106. Alternatively, tower 102 is any tower that enables wind turbine generator 100 to function as described herein including, but not limited to, a lattice tower. The height of tower 102 is any value that enables wind turbine generator 100 to function as described herein.

Blades 112 are positioned about rotor hub 110 to facilitate rotating rotor 108, thereby transferring kinetic energy from wind 124 into usable mechanical energy, and subsequently, electrical energy. Rotor 108 and nacelle 106 are rotated about tower 102 on a yaw axis 116 to control the perspective of blades 112 with respect to the direction of wind 124. Blades 112 are mated to hub 110 by coupling a blade root portion 120 to hub 110 at a plurality of load transfer regions 122. Load transfer regions 122 have a hub load transfer region and a blade load transfer region (both not shown in Figure 1). Loads induced in blades 112 are transferred to hub 110 via load transfer regions 122. Each of blades 112 also includes a blade tip portion 125.

In the exemplary embodiment, blades 112 have a length range of between 30 meters (m) (98 feet (ft)) and 50 m (164 ft), however these parameters form no limitations to the instant disclosure. Alternatively, blades 112 may have any length that enables wind turbine generator to function as described herein. As wind 124 strikes each of blades 112, blade lift forces (not shown) are induced on each of blades 112 and rotation of rotor 108 about rotation axis 114 is induced as blade tip portions 125 are accelerated.

A pitch angle (not shown) of blades 112, i.e., an angle that determines each of blades' 112 perspective with respect to the direction of wind 124, may be changed by a pitch adjustment mechanism (not shown in Figure 1). Specifically, increasing a pitch angle of blade 112 decreases a percentage of a blade surface area 126 exposed to wind 124 and, conversely, decreasing a pitch angle of blade 112 increases a percentage of blade surface area 126 exposed to wind 124. The pitch angles of blades 112 are adjusted about a pitch axis 118 for each of blades 112. In the exemplary embodiment, the pitch angles of blades 112 are controlled individually. Alternatively, blades' 112 pitch may be controlled as a group.

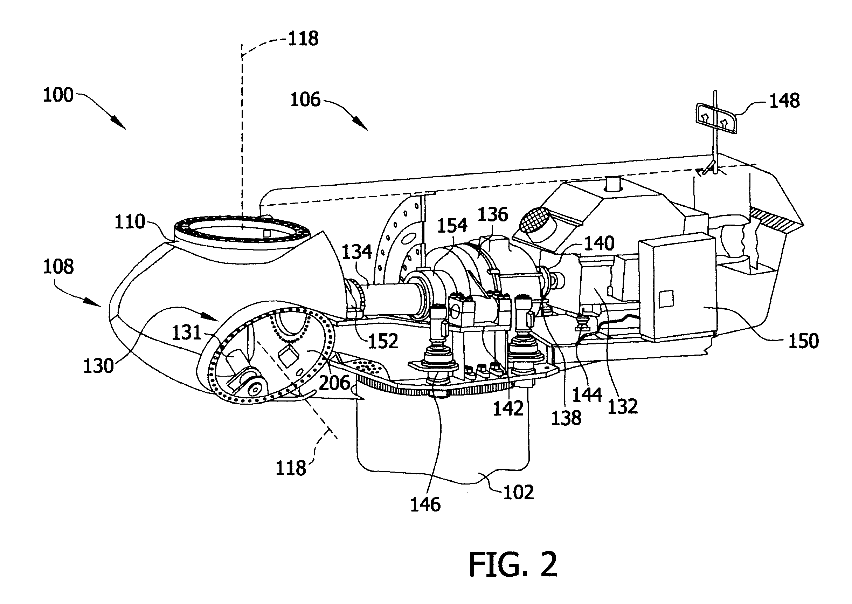

Figure 2 is a cross-sectional schematic view of nacelle 106 of exemplary wind turbine 100. Various components of wind turbine 100 are housed in nacelle 106 atop tower 102 of wind turbine 100. Nacelle 106 includes one pitch drive mechanism 130 that is coupled to one blade 112 (shown in Figure 1), wherein mechanism 130 modulates the pitch of associated blade 112 along pitch axis 118. Only one of three pitch drive mechanisms 130 is shown in Figure 2. In the exemplary embodiment, each pitch drive mechanism 130 includes at least one pitch drive motor 131, wherein pitch drive motor 131 is any electric motor driven by electrical power that enables mechanism 130 to function as described herein. Alternatively, pitch drive mechanisms 130 include any suitable structure, configuration, arrangement, and/or components such as, but not limited to, hydraulic cylinders, springs, and servomechanisms. Moreover, pitch drive mechanisms 130 may be driven by any suitable means such as, but not limited to, hydraulic fluid, and/or mechanical power, such as, but not limited to, induced spring forces and/or electromagnetic forces.

Nacelle 106 also includes a rotor 108 that is rotatably coupled to an electric generator 132 positioned within nacelle 106 via rotor shaft 134 (sometimes referred to as either main shaft 134 or low speed shaft 134), a gearbox 136, a high speed shaft 138, and a coupling 140. Rotation of shaft 134 rotatably drives gearbox 136 that subsequently rotatably drives shaft 138. Shaft 138 rotatably drives generator 132 via coupling 140 and shaft 138 rotation facilitates generator 132 production of electrical power. Gearbox 136 and generator 132 are supported by supports 142 and 144, respectively. In the exemplary embodiment, gearbox 136 utilizes a dual path geometry to drive high speed shaft 138. Alternatively, rotor shaft 134 is coupled directly to generator 132 via coupling 140.

Nacelle 106 further includes a yaw adjustment mechanism 146 that may be used to rotate nacelle 106 and rotor 108 on axis 116 (shown in Figure 1) to control the perspective of blades 112 with respect to the direction of the wind. Nacelle 106 also includes at least one meteorological mast 148, wherein mast 148 includes a wind vane and anemometer (neither shown in Figure 2). Mast 148 provides information to a turbine control system (not shown) that may include wind direction and/or wind speed. A portion of the turbine control system resides within a control panel 150. Nacelle 106 further includes forward and aft support bearings 152 and 154, respectively, wherein bearings 152 and 154 facilitate radial support and alignment of rotor shaft 134.

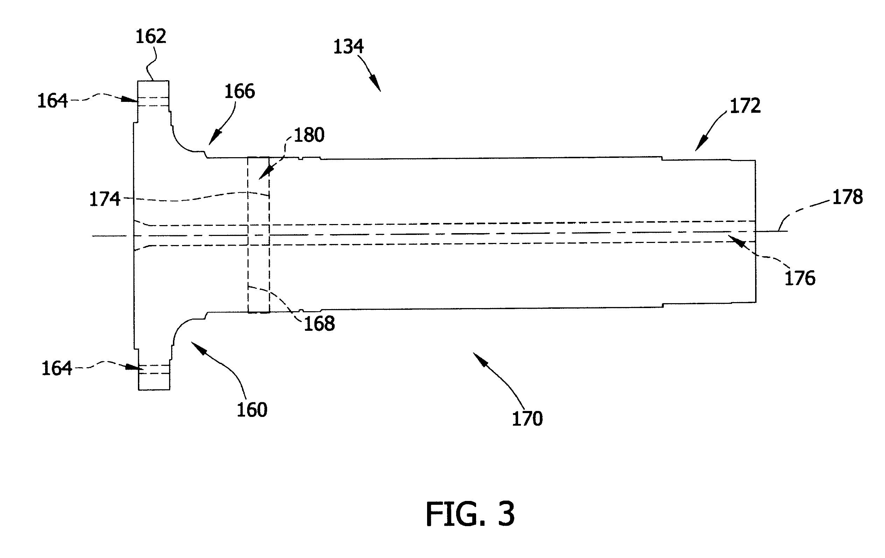

Figure 3 is a schematic view of exemplary rotor shaft 134 that may be used with wind turbine generator 100. In the exemplary embodiment, rotor shaft 134 is a multi-alloy, multi-piece shaft. Rotor shaft 134 includes a first portion 160 fabricated by forging a first steel alloy having a first strength property value. In the exemplary embodiment, the first steel alloy is 34CrNiMo6, a high-alloy and high-strength steel. Alternatively, first portion 160 is fabricated from any material, without limitation, that enables rotor shaft 134 as described herein. The first property value is any value of any property typically associated with structural steel members including, without limitation, tensile strength and yield strength. In the exemplary embodiment, a range of ultimate tensile stress values for samples of 34CrNiMo6 having a diameter in the range of approximately 10 millimeters (mm) (0.39 inches (in)) to approximately 100 mm (3.9 in) includes approximately 800 MegaPascal (MPa) (116,000 pounds per square inch (psi)) to approximately 1000 MPa (145,000 psi). Also, in the exemplary embodiment, a range of yield stress values for samples of 34CrNiMo6 having a diameter in the range of approximately 10 (mm) (0.39 in) to approximately 100 mm (3.9 in) includes approximately 600 MPa (87,000 psi) to approximately 650 MPa (94,250 psi).

First portion 160 includes a hub attachment flange 162 that defines a plurality of hub attachment fastener passages 164. Flange 162 and passages 164 facilitate coupling rotor shaft 134 to hub 110 (shown in Figures 1 and 2). First portion 160 also defines a high stress region 166 in the vicinity of first portion 160 stepping down in diameter. First portion 160 defines a first welding face 168 on an axially inboardmost region of first portion 160.

Also, in the exemplary embodiment, rotor shaft 134 includes a second portion 170 fabricated by forging a second steel alloy having a second strength property value. In the exemplary embodiment, the second steel alloy is 42CrMo6, a lower-alloy, lower-strength steel as compared to 34CrNiMo6 discussed above. Alternatively, second portion 170 is fabricated from any material, without limitation, that enables rotor shaft 134 as described herein. The second value is any value of any property typically associated with steel members including, without limitation, tensile strength and yield strength. In the exemplary embodiment, a range of ultimate tensile stress values for samples of 42CrMo6 having a diameter in the range of approximately 10 (mm) (0.39 in) to approximately 100 mm (3.9 in) includes approximately 860 MPa (127,700 psi) to approximately 1060 MPa (153,700 psi). Also, in the exemplary embodiment, a range of yield stress values for samples of 42CrMo6 having a diameter in the range of approximately 10 (mm) (0.39 in) to approximately 100 mm (3.9 in) includes approximately 700 MPa (101,500 psi) to approximately 760 MPa (110,200 psi).

In the exemplary and alternative embodiments, as described herein, diameters for rotor shafts 134 range from approximately 520 mm (20.5 in) to approximately 750 mm (29.5 in), that is, approximately at least one order of magnitude greater than the diameters of the sample sizes discussed above. Addition of nickel (Ni) to 34CrNiMo6 facilitates more uniform quenching action of 34CrNiMo6 as compared to 42CrMo6 during the fabrication activities, therefore the strength properties of 34CrNiMo6 for exemplary and alternative rotor shafts 134 as described herein are greater than that of 42CrMo6 for exemplary and alternative rotor shafts 134 as described herein.

Therefore, in general, the first strength property values of first portion 160 are greater than the second strength property values of second portion 170.

Second portion 170 includes a gearbox attachment region 172 that facilitates coupling rotor shaft 134 to gearbox 136 (shown in Figure 2). Second portion 170 defines a low stress region that includes substantially all of portion 170. Second portion 170 also defines a second welding face 174 on an axially outboardmost region of second portion 170.

First portion 160 and second portion 170 cooperate to define an axially gun-drilled bore 176 and an axial rotor shaft centerline 178. Moreover, first welding face 168 and second welding face 174, and the associated immediate vicinities of each, including, but not limited to, weld-affected regions or heat-affected zones (neither shown) at least partially define a weld interface 180 of the dissimilar metals associated with each of portions 160 and 170. Weld interface 180 is formed by at least one of a plurality of methods as described herein. Further, when first portion 160 and second portion 170 are coupled to each other, rotor shaft 134 is assembled having a relatively high tensile and yield strength portion, or first portion 160 that facilitates receipt of a relatively large value of tensile load stresses from hub 110, and a relatively lower tensile and yield strength portion, or second portion 170 that facilitates receipt of relatively lower value tensile load stresses from first portion 160 and gearbox 136. In the exemplary embodiment, a range of expected tensile stresses induced on first portion 160 during operation is less than approximately 50 MPa (7,250 psi) to approximately 500 MPa (72,500 psi). Also, in the exemplary embodiment, second portion 170 is typically exposed to compressive stresses as opposed to tensile stresses.

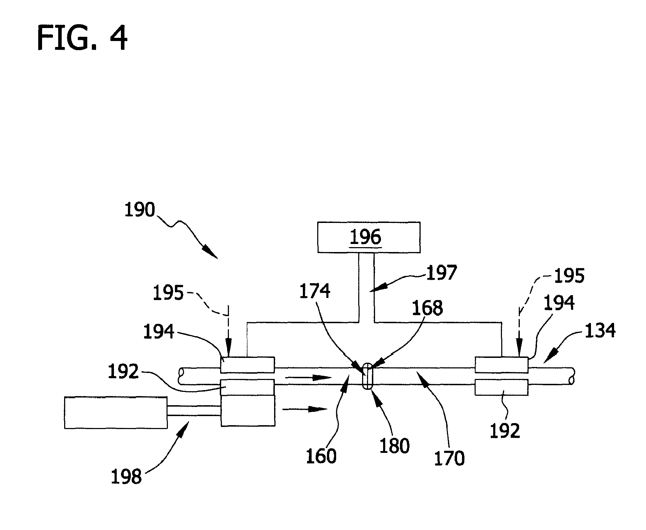

Figure 4 is a schematic view of an exemplary flash welding configuration 190 that may be used to fabricate rotor shaft 134. Flash welding configuration 190 facilitates flash butt welding of first portion 160 and second portion 170 via faces 168 and 174, respectively, to form weld interface 180. Flash welding configuration 190 includes a plurality of fixed platen devices 192 that each of portions 160 and 170 rest upon. Flash welding configuration 190 also includes a plurality of clamping devices 194 that facilitate reducing undesired movement of each of portions 160 and 170 by applying a clamping force at least partially represented by dashed arrows 195. Values of the clamping force are at least partially based on materials and dimensions associated with rotor shaft 134, therefore such clamping force values vary significantly. Flash welding configuration 190 further includes a welding power source 196 that includes, without limitation, devices such as electric power transformers (not shown). Flash welding configuration 190 also includes a plurality of electrical power leads 197 that couple welding power source 196 to each of clamping devices 194. Flash welding configuration 190 further includes an acceleration system 198 coupled to a side of configuration 190 associated with first portion 160. Alternatively, acceleration system 198 is coupled to a side of configuration 190 associated with second portion 170. Also, alternatively, acceleration system 198 is coupled to both sides of configuration 190.

In operation, first portion 160 and second portion 170 are set on fixed platen devices 192 and are secured, or clamped via clamping devices 194. First welding face 168 and second welding face 174 are initially separated slightly from each other by a small gap (not shown). Electric power source 196 is energized and electric current flows from source 196 to and from clamping devices 194 via electrical power leads 197. At least some of the electrical current is transmitted across each of faces 168 and 174, wherein the current flows through successive points of near contact, jumps the gap formed between faces 168 and 174, creates a flash with a great deal of heat that heats and melts faces 168 and 174 rapidly, thereby generating a characteristic flashing action.

Some of the metal burns away during the current flow and after a pre-set material loss has occurred and sufficient heat and temperature has been generated within the material behind each of faces 168 and 174 to form a plastic state. Subsequently, portion 160 is accelerated towards portion 170 via acceleration device 198, wherein portions 160 and 170 are forced together under high pressure to form weld interface 180 and the electric current is discontinued. In the exemplary embodiment, weld interface 180 is a solid phase, substantially homogeneous, forged butt weld wherein at least some material and contaminants are expelled, and no filler material is used. Weld interface 180 is then allowed to cool slightly while under pressure, before clamping device 194 are opened to release the welded component, that is, rotor shaft 134. The weld upset is then removed by shearing while still hot or by grinding when cooled, depending on the circumstances.

Some of the benefits of flash welding as described herein include high weld quality because of solid fusion and lack of a molten pool, thereby eliminating many conventional defects. Moreover, flash welding offers forming weld interface 180 with excellent strength factor values and good fatigue properties values. Such flash welding processes may be automated and controlled remotely via a control system (not shown), thereby significantly reducing a need for manual welding skills and consumables, such as, but not being limited to, filler material and shielding gases.

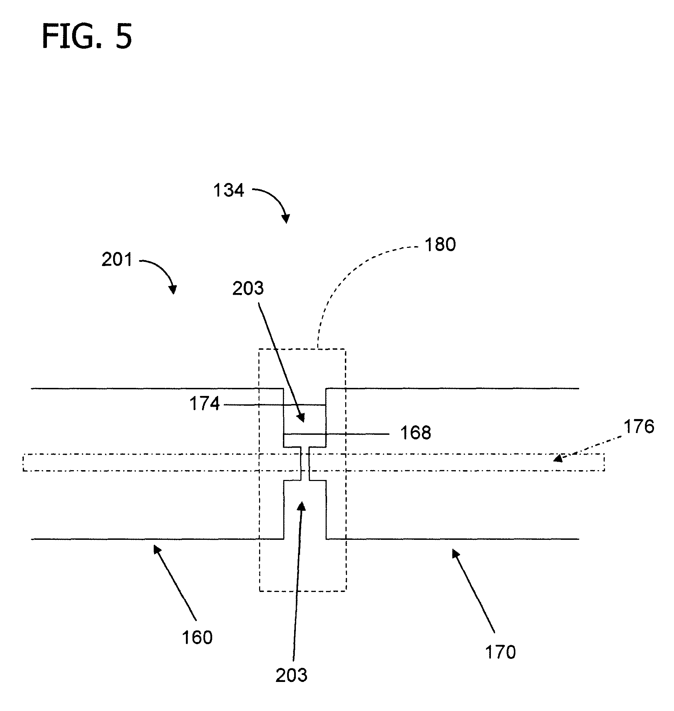

Figure 5 is a schematic view of an exemplary arc welding configuration 201 that may be used to fabricate rotor shaft 134. In the exemplary embodiment, configuration 201 includes a groove 203 that facilitates a plurality of welding processes that include, but are not limited to, narrow-groove gas tungsten arc welding (GTAW), gas metal arc welding (GMAW), and flux-cored arc welding (FCAW).

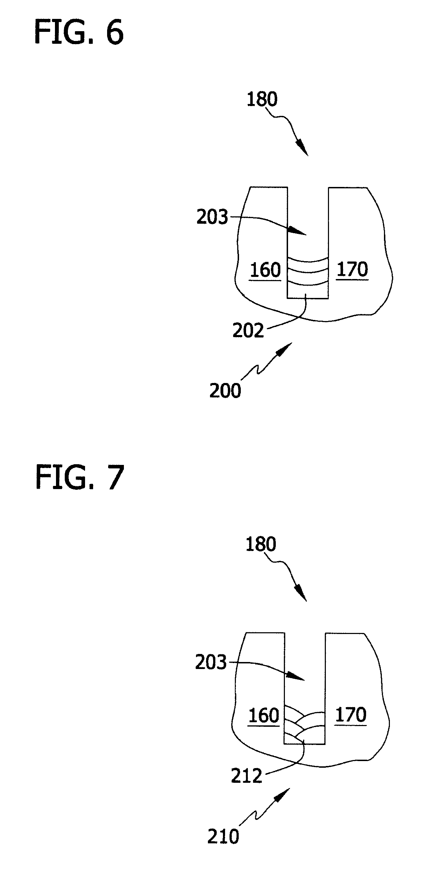

Figure 6 is a schematic view of a portion of an exemplary arc weld 200 that may be used to fabricate rotor shaft 134 (shown in Figure 3) and form weld interface 180. In the exemplary embodiment, arc weld 200 includes a plurality of single pass per layer weld beads 202 formed within groove 203. Figure 7 is a schematic view of a portion of an alternative arc weld 210 that may be used to fabricate rotor shaft 134 (shown in Figure 3) and form weld interface 180. In the exemplary embodiment, arc weld 210 includes a plurality of two passes per layer weld beads 212 formed within groove 203.

Referring to both Figures 6 and 7, in the exemplary embodiment, such welding processes that include, but are not limited to, narrow-groove GTAW, GMAW, and FCAW include a configuration with groove 203 between ½ inch and 1 inch wide at a bottom of groove 203 and a total included groove angle between 0° and 8°. Some of the advantages of narrow-groove GTAW, GMAW, and FCAW as described herein include forming a suitable weld pool geometry that, in conjunction with adequate heat input, can substantially reduce coarse-grain fractions by the reheating effects of subsequent weld seams. Other advantages include reduced consumption of filler material and reduced distortion of first portion 160 and second portion 170. Moreover, such arc welding processes may be automated and controlled remotely via a control system (not shown), thereby significantly reducing a need for manual welding skills.

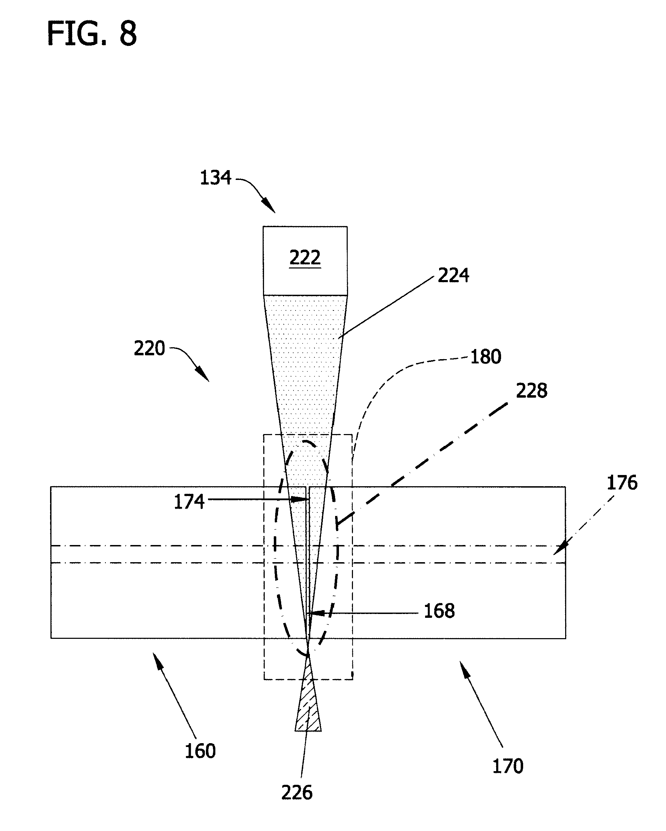

Figure 8 is a schematic view of an exemplary laser welding configuration 220 that may be used to fabricate rotor shaft 134. Configuration 220 facilitates a plurality of welding processes that include, but are not limited to, laser beam welding and hybrid laser beam welding, wherein hybrid laser beam welding combines features of laser beam welding and arc welding as described above. In the exemplary embodiment, configuration 220 includes a laser beam device 222 that is any suitable device for generating laser beam 224 that facilitates forming weld interface 180 as described herein. A portion of laser beam 224 may exit weld interface 180 and form exiting laser beam 226. Laser beam 224 intersects first portion 160 and second portion 170 at faces 168 and 174, respectively, and forms a metal vapor plasma and molten material region 228. Some advantages of such laser beam welding processes include, but are not limited to, high-quality welds and reduced consumption of filler material. Moreover, such laser welding processes may be automated and controlled remotely via a control system (not shown), thereby significantly reducing a need for manual welding skills.

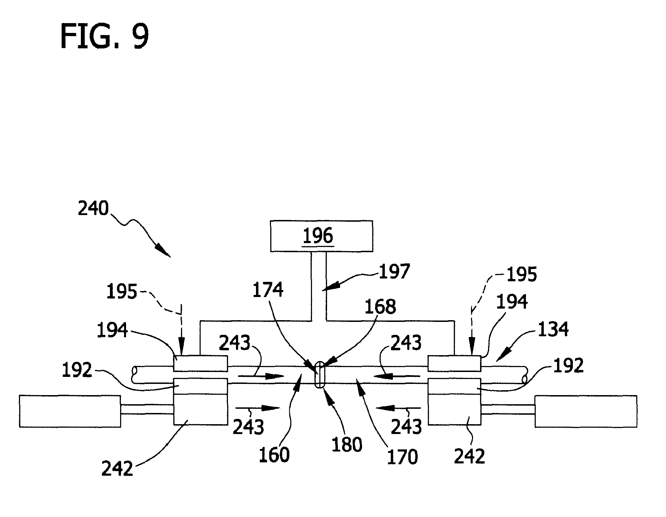

Figure 9 is a schematic view of an exemplary resistance welding configuration 240 that may be used to fabricate rotor shaft 134. Resistance welding configuration 240 facilitates resistance butt welding of first portion 160 and second portion 170 via faces 168 and 174, respectively, to form weld interface 180. Similar to flash welding configuration 190 (shown in Figure 4), in the exemplary embodiment, resistance welding configuration 240 includes plurality of fixed platen devices 192, plurality of clamping devices 194, welding power source 196, and plurality of electrical power leads 197. In contrast to acceleration system 198 (shown in Figure 4) of flash welding configuration 190, resistance welding configuration 240 includes at least one force device 242 that induces a force between faces 168 and 174 substantially in the direction of the horizontal arrows 243 shown in Figure 9. Values of the horizontal force are at least partially based on materials and dimensions associated with rotor shaft 134, therefore such horizontal force values vary significantly. Force device 242 is coupled to platen device 192. In the exemplary embodiment, force device 242 is coupled to both sides of configuration 240. Alternatively, force device 242 is coupled to a side of configuration 240 associated with first portion 160 or with second portion 170.

Operation of resistance welding configuration 240 is similar to operation of flash welding configuration 190 with the exception that in contrast to accelerating portion 160 towards portion 170 via acceleration device 198 after electrical current is applied and faces 168 and 174 have been heated to a plastic state, force device 242 induces a substantially constant force substantially in the direction of the horizontal arrows shown in Figure 9 to mate faces 168 and 174 from initial application of electrical current until weld interface 180 is substantially formed. Faces 168 and 174 are forced together to form weld interface 180, and subsequently, the electric current is discontinued. Similar to flash welding configuration 190, weld interface 180 formed by resistance welding configuration 240 is a solid phase, substantially homogeneous, forged butt weld wherein at least some material and contaminants are expelled, and no filler material is used. Weld interface 180 is then allowed to cool slightly while under pressure, before clamping devices 194 are opened to release the welded component, that is, rotor shaft 134. The weld upset is then removed by shearing while still hot or by grinding when cooled, depending on the circumstances.

Some advantages of such resistance welding processes include, but are not limited to, high-quality welds and reduced consumption of filler material. Moreover, such resistance welding processes may be automated and controlled remotely via a control system (not shown), thereby significantly reducing a need for manual welding skills.

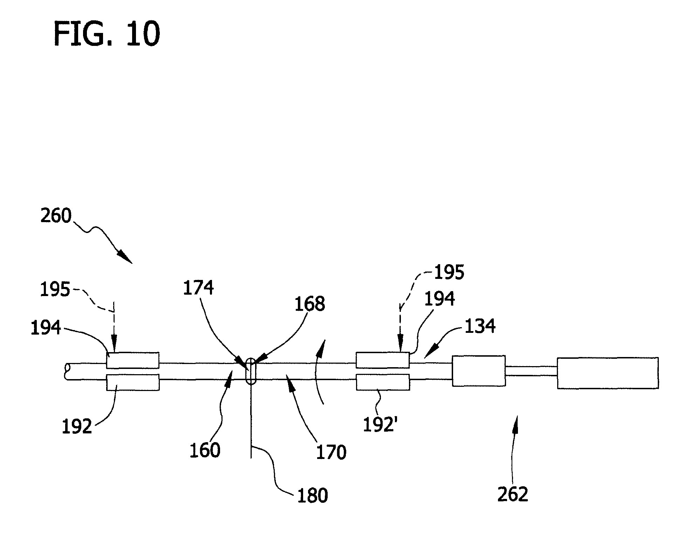

Figure 10 is a schematic view of an exemplary friction welding configuration 260 that may be used to fabricate rotor shaft 134. In the exemplary embodiment, friction welding configuration 260 is referred to as an inertia welding system. Friction welding configuration 260 facilitates friction butt welding of first portion 160 and second portion 170 via faces 168 and 174, respectively, to form weld interface 180.

In the exemplary embodiment, friction welding configuration 260 includes a fixed platen device 192. Friction welding configuration 260 also includes a rotatable platen device 192'. Friction welding configuration 260 further includes a plurality of clamping devices 194 that facilitate reducing undesired movement of each of portions 160 and 170 by applying a clamping force at least partially represented by the dashed arrows 195. Values of the clamping force are at least partially based on materials and dimensions associated with rotor shaft 134, therefore such clamping force values vary significantly. Friction welding configuration also includes a spin device 262 that is coupled to at least one end of second portion 170. Devices 192 and 194 are coupled to first portion 160 to facilitate maintaining first portion 160 substantially stationary. Moreover, devices 192' and 194 are coupled to second portion 170 to facilitate maintaining alignment of second piece 170 as second piece 170 rotates. Spin device 262 induces a rotating force on second portion 170 in the direction of the curved arrow shown in Figure 10.

In operation, first portion 160 and second portion 170 are set on fixed platen device 192 and rotatable platen device 192', respectively, and both are secured, or clamped via clamping devices 194. First welding face 168 and second welding face 174 contact each other. Spin device 262 is energized and second portion 170 is rotated at a predetermined rotational velocity while first portion 160 is maintained substantially stationary. A great deal of friction heat is generated in faces 168 and 174 melts faces 168 and 174, some of the metal bums, and after a pre-set material loss has occurred and sufficient heat and temperature has been generated portions 160 and 170 form weld interface 180 and spin device 262, along with second portion 170, are decelerated. Values of the rotational velocity, material losses, heat, and temperature are at least partially based on materials and dimensions associated with rotor shaft 134, therefore such material losses, heat, and temperature values vary significantly. In the exemplary embodiment, weld interface 180 is a solid phase, substantially homogeneous, forged butt weld wherein at least some material and contaminants are expelled, and no filler material is used. Weld interface 180 is then allowed to cool slightly before clamping devices 194 are opened to release the welded component, that is, rotor shaft 134. The weld upset is then removed by shearing while still hot or by grinding when cooled, depending on the circumstances.

Some advantages of such friction, or inertia welding processes include, but are not limited to, high-quality welds and reduced consumption of filler material. Moreover, such friction welding processes may be automated and controlled remotely via a control system (not shown), thereby significantly reducing a need for manual welding skills.

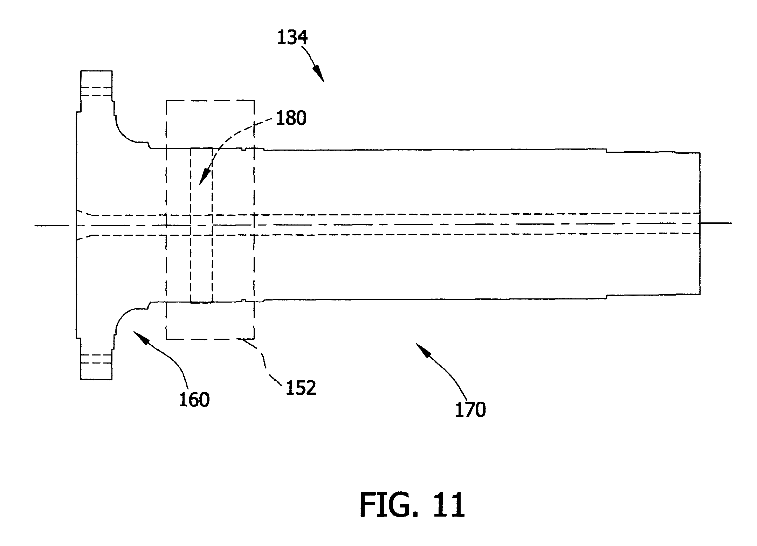

Figure 11 is a schematic view of bearing 152 extending about at least a portion of rotor shaft 134. In the exemplary embodiment, bearing 152 also extends about at least a portion of weld interface 180, thereby facilitating support of rotor shaft 134 where the structural strength of rotor shaft 134 may be weakest and the associated stresses may be greatest.

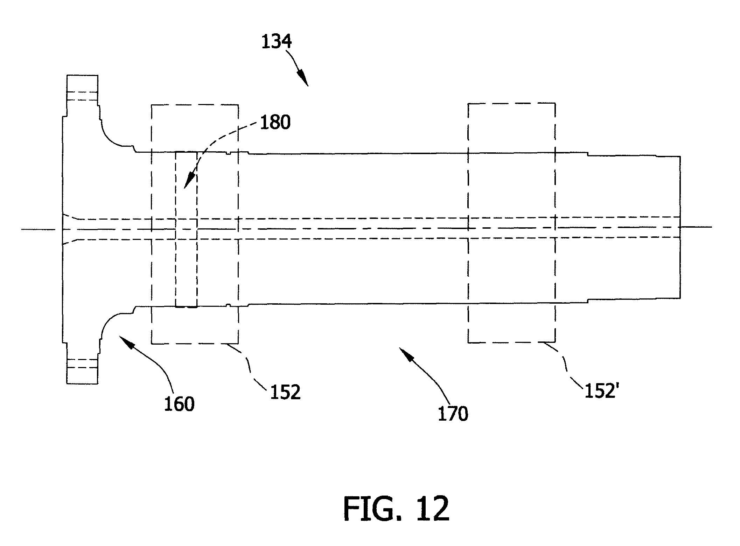

Figure 12 is a schematic view of two bearings 152 and 152' extending about at least a portion of rotor shaft 134. In this alternative embodiment, bearing 152 also extends about at least a portion of weld interface 180, thereby facilitating support of rotor shaft 134 where the structural strength of rotor shaft 134 may be weakest and the associated stresses may be greatest. Moreover, in this alternative embodiment, bearing 152' facilitates additional support for larger-diameter or extended-length rotor shafts 134. In this alternative embodiment, "larger-diameter" refers to diameters of rotor shaft 134 in the range of approximately 700 mm (27.6 in) to approximately 750 mm (29.5 in), wherein an associated flange 162 (shown in Figure 3) has a diameter range of approximately 1450 (mm) (57 in) to approximately 1550 mm (61 in), wherein a typical value is approximately 1500 mm (59 in).

Such "larger diameter" values are contrasted to diameters of the exemplary embodiment of rotor shaft 134 as described herein, having a diameter range of approximately 520 mm (20.5 in) to approximately 600 mm (23.6 in), and having an associated flange 162 that has a diameter range 1300 mm (51 in) to approximately 1400 mm (55 in), wherein a typical value is approximately 1350 mm (53 in).

Also, in this alternative embodiment, "extended length" refers to lengths of rotor shaft 134 in the range of approximately 2525 millimeters (mm) (99 inches (in)) to approximately 2565 mm (101 in), wherein a typical value is approximately 2535 mm (100 in). Such "extended length" values are contrasted to lengths of the exemplary embodiment of rotor shaft 134 as described herein, wherein such lengths are in the range of approximately 2160 mm (85 in) to approximately 2260 mm (89 in), and wherein a typical value is approximately 2220 mm (87 in). Further alternative embodiments include, without limitation, any length and diameter of rotor shaft 134, and number of bearings such as bearings 152 and 152'.

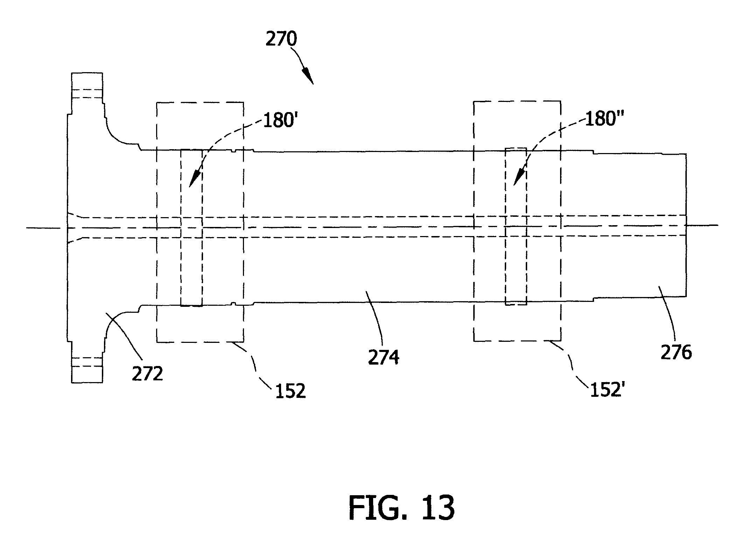

Figure 13 is a schematic view of an alternative rotor shaft 270 that may be used with wind turbine generator 100. In this alternative embodiment, rotor shaft 270 includes an alternative first portion 272 that is substantially similar metallurgically to first portion 160 (shown in Figures 3 through 12). Also, in this alternative embodiment, rotor shaft 270 includes a second portion 274 that is coupled to first portion 272 via a first weld interface 180', wherein first weld interface 180' is substantially similar to weld interface 180 (shown in Figures 3 through 6 and 8 through 12). Second portion 274 is substantially similar metallurgically to second portion 170 (shown in Figures 3 through 13). Further, in this alternative embodiment, rotor shaft 270 includes a third portion 276 that is substantially similar metallurgically to alternative first portion 272. Moreover, in this alternative embodiment, third portion 276 is coupled to second portion 274 via a second weld interface 180", wherein weld interface 180" is substantially similar to first weld interface 180'. Alternative rotor shaft 270 facilitates higher loading and stresses associated with either gear box 136 and generator 132 (both shown in Figure 2) than does rotor shaft 134.

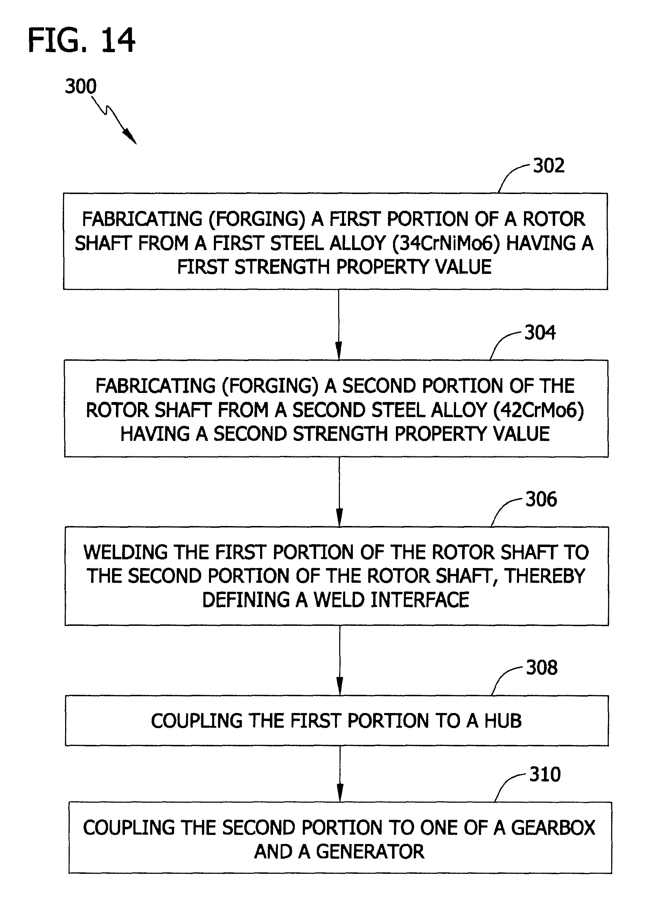

Figure 14 is a flow chart of an exemplary method 300 of assembling wind turbine generator 100 (shown in Figures 1, 2, 3, 5, 8, 11, 12, and 13). Exemplary method 300 includes fabricating 302 first portion 160 (shown in Figures 3 through 13) of rotor shaft 134 (shown in Figures 2 through 5 and 8 through 13) from a first steel alloy having a first strength property value. Method 300 also includes fabricating 304 second portion 170 (shown in Figures 3 through 13) of rotor shaft 134 from a second steel alloy having a second strength property value. The first strength property value is greater than the second strength property value. Method 300 further includes welding 306 second portion 170 to first portion 160 by at least one of flash welding, narrow-groove gas tungsten arc welding (GTAW), gas metal arc welding (GMAW), flux-cored arc welding (FCAW), laser beam welding, hybrid laser beam welding, resistance welding, and friction welding, thereby forming weld interface 180.

In exemplary method 300, first portion 160 of rotor shaft 134 is forged from a high-alloy, high-strength steel, such as, but not limited to, 34CrNiMo6, and second portion 170 of rotor shaft 134 is forged from a comparatively lower-alloy, lower-strength steel, such as, but not limited to, 42CrMo6. Also, in exemplary method 300, welding first portion 160 and second portion 170 to each other as described herein defines weld interface 180. Further, exemplary method 300 includes coupling 308 first portion 160 to hub 110 (shown in Figures 1 and 2). Also, exemplary method 300 includes coupling 310 second portion 170 of rotor shaft 134 to at least one of gearbox 136 and generator 132 (both shown in Figure 2).

The above-described method and rotor shaft facilitate assembly of wind turbine generators by using higher-strength, more robust steel alloys in the forward portion of the rotor shaft that typically experiences higher stress and loading. This is contrasted to using lower strength, less robust steel alloys in the aft portion of the rotor shaft that typically experiences lower stress and loading. The forward and aft portions of the rotor shaft are welded to each other by at least one of flash welding, narrow-groove gas tungsten arc welding (GTAW), gas metal arc welding (GMAW), flux-cored arc welding (FCAW), laser beam welding, hybrid laser beam welding, resistance welding, and friction welding. Specifically, a technical effect of fabricating two separate portions of the rotor shaft provides a cost savings opportunity by requiring smaller forging equipment and smaller machining equipment, as well as separate suppliers for each portion. Also, specifically, a technical effect of using low-alloy steel on a portion of the rotor shaft provides a potential cost savings with low material costs. Further, specifically, technical effects of flash welding, narrow-groove gas tungsten arc welding (GTAW), gas metal arc welding (GMAW), flux-cored arc welding (FCAW), laser beam welding, hybrid laser beam welding, resistance welding, and friction welding include lower costs due to less labor and materials.

Exemplary embodiments of method and rotor shaft for assembling wind turbine generators are described above in detail. The method and rotor shaft are not limited to the specific embodiments described herein, but rather, components of rotor shafts and/or steps of the methods may be utilized independently and separately from other components and/or steps described herein. For example, the methods may also be used in combination with other wind turbine generators, and are not limited to practice with only the wind turbine generator as described herein. Rather, the exemplary embodiment can be implemented and utilized in connection with many other wind turbine generator applications.

While the invention has been described in terms of various specific embodiments, those skilled in the art will recognize that the invention can be practiced with modification within the spirit and scope of the claims.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for assembling a wind turbine generator, said method comprising:
   fabricating a first portion of a shaft from a first steel alloy having a first strength property value;
   fabricating a second portion of the shaft from a second steel alloy having a second strength property value, wherein the first strength property value is greater than the second strength property value; and
   welding the second portion of the shaft to the first portion of the shaft.
2. A method in accordance with Clause 1 wherein fabricating a first portion and fabricating a second portion comprises forging the first portion of the shaft and forging the second portion of the shaft.
3. A method in accordance with any preceding Clause wherein fabricating a first portion of a shaft from a first steel alloy having a first strength property value comprises forging the first portion of the shaft from steel alloy 34CrNiMo6.
4. A method in accordance with any preceding Clause wherein fabricating a second portion of a shaft from a second steel alloy having a second strength property value comprises forging the second portion of the shaft from steel alloy 42CrMo6.
5. A method in accordance with any preceding Clause wherein welding the second portion of the shaft to the first portion of the shaft comprises:
   defining a weld interface; and
   using at least one of flash welding, narrow-groove gas tungsten arc welding (GTAW), gas metal arc welding (GMAW), flux-cored arc welding (FCAW), laser beam welding, hybrid laser beam welding, resistance welding, and friction welding.
6. A method in accordance with any preceding Clause further comprising coupling said first portion of said shaft to a wind turbine rotor hub.
7. A method in accordance with any preceding Clause further comprising coupling said second portion of said shaft to at least one of a gearbox and a generator.
8. A wind turbine rotor comprising:
   a first portion of a shaft fabricated from a first steel alloy having a first strength property value; and
   a second portion of said shaft fabricated from a second steel alloy having a second strength property value, wherein the first strength property value is greater than the second strength property value, said second portion of said shaft is welded to said first portion of said shaft.
9. A wind turbine rotor in accordance with any preceding Clause wherein at least a portion of said first portion of said shaft comprises steel alloy 34CrNiMo6.
10. A wind turbine rotor in accordance with any preceding Clause wherein at least a portion of said second portion of said shaft comprises steel alloy 42CrMo6.
11. A wind turbine rotor in accordance with any preceding Clause wherein said first portion of said shaft and said second portion of said shaft define a weld interface.
12. A wind turbine rotor in accordance with any preceding Clause wherein said weld interface is formed by one of flash welding and narrow-groove submerged arc welding (SAW).
13. A wind turbine rotor in accordance with any preceding Clause wherein said weld interface is formed by at least one of gas metal arc welding (GMAW), flux-cored arc welding (FCAW), laser beam welding, hybrid laser beam welding, resistance welding, and friction welding.
14. A wind turbine generator comprising:
   at least one of a gearbox and a generator; and
   a rotor comprising:
      a hub;
         a first portion of a shaft fabricated from a first steel alloy having a first strength property value coupled to said hub; and
         a second portion of said shaft fabricated from a second steel alloy having a second strength property value, wherein the first strength property value is greater than the second strength property value, said second portion of said shaft is coupled to said first portion of said shaft and to at least one of said gearbox and said generator.
15. A wind turbine generator in accordance with any preceding Clause wherein at least a portion of said first portion of said shaft comprises steel alloy 34CrNiMo6.
16. A wind turbine generator in accordance with any preceding Clause wherein at least a portion of said second portion of said shaft comprises steel alloy 42CrMo6.
17. A wind turbine generator in accordance with any preceding Clause wherein said first portion of said shaft and said second portion of said shaft define a weld interface.
18. A wind turbine generator in accordance with any preceding Clause wherein said weld interface is formed by at least one of flash welding, narrow-groove gas tungsten arc welding (GTAW), gas metal arc welding (GMAW), flux-cored arc welding (FCAW), laser beam welding, hybrid laser beam welding, resistance welding, and friction welding.
19. A wind turbine generator in accordance with any preceding Clause further comprising at least one bearing extending about at least a portion of said shaft.
20. A wind turbine generator in accordance with any preceding Clause further comprising at least one bearing extending about at least a portion of said weld interface.

## Claims

1. A wind turbine rotor (108) comprising:
a first portion (160) of a shaft (134) fabricated from a first steel alloy having a first strength property value; and
a second portion (170) of said shaft fabricated from a second steel alloy having a second strength property value, wherein the first strength property value is greater than the second strength property value, said second portion of said shaft is welded to said first portion of said shaft.

2. A wind turbine rotor (108) in accordance with Claim 1 wherein at least a portion of said first portion (160) of said shaft (134) comprises steel alloy 34CrNiMo6.

3. A wind turbine rotor (108) in accordance with any preceding Claim wherein at least a portion of said second portion (170) of said shaft (134) comprises steel alloy 42CrMo6.

4. A wind turbine rotor in (108) accordance with any preceding Claim wherein said first portion (160) of said shaft (134) and said second portion (170) of said shaft define a welded interface (180).

5. A wind turbine rotor (108) in accordance with any preceding Claim wherein said welded interface (180) is formed by one of flash welding and narrow-groove submerged arc welding (SAW).

6. A wind turbine rotor (108) in accordance with any preceding Claim wherein said welded interface (180) is formed by at least one of gas metal arc welding (GMAW), flux-cored are welding (FCAW), laser beam welding, hybrid laser beam welding, resistance welding, and friction welding.

7. A wind turbine generator (100) comprising:
at least one of a gearbox (136) and a generator (132) and
a rotor (108) comprising:
a hub (110) ;
a first portion (160) of a shaft (134) fabricated from a first steel alloy having a first strength property value coupled to said hub; and
a second portion (170) of said shaft fabricated from a second steel alloy having a second strength property value, wherein the first strength property value is greater than the second strength property value, said second portion of said shaft is coupled to said first portion of said shaft and to at least one of said gearbox and said generator.

8. A wind turbine generator (100) in accordance with Claim 7 wherein at least a portion of said first portion (160) of said shaft (134) comprises steel alloy 34CrNiMo6.

9. A wind turbine generator (100) in accordance with Claim 7 or Claim 8 wherein at least a portion of said second portion (170) of said shaft (134) comprises steel alloy 42CrMo6.

10. A wind turbine generator (100) in accordance with any of Claims 7 to 9 wherein said first portion (160) of said shaft (134) and said second portion (170) of said shaft define a welded interface (180).
